# FASCICULE DE BREVET EUROPEEN

(11) **EP 4 474 286 B1**
(45) Date de publication et mention de la délivrance du brevet: **05.11.2025**
(21) Numéro de dépôt: 24178422.2
(22) Date de dépôt: 28.05.2024
(51) Int. Cl.: B64D 29/06, E05C 19/14

(54) **VERROU À CROCHET POUR CAPOTS DE NACELLE D'AÉRONEF**
HAKENVERRIEGELUNG FÜR FLUGZEUGGONDELVERKLEIDUNGEN
HOOK LATCH FOR AIRCRAFT NACELLE COVERS

(30) Priorité: 05.06.2023 FR 2305633
(43) Date de publication de la demande: 11.12.2024
(73) Titulaire: LISI Aerospace, 75012 Paris (FR)
(72) Inventeur: RENARD, Laurent, 18100 VIERZON (FR)
(74) Mandataire: Lavoix

(56) Documents cités:
- DE-C- 682 872
- US-A- 3 259 411
- US-A- 4 531 769
- US-A- 4 538 843
- US-A- 5 984 382

## Description

La présente invention concerne un verrou destiné à assembler un premier et un second éléments de structure, du type comportant : une console apte à être fixée au premier capot ; un bras d'accrochage comprenant un crochet apte à coopérer avec une barre d'accrochage fixée au second capot ; une première poignée mobile en rotation par rapport à la console, entre une première configuration ouverte et une première configuration fermée ; une deuxième poignée mobile en rotation par rapport à la console, entre une deuxième configuration ouverte et une deuxième configuration fermée ; les première et deuxième poignées étant configurées de sorte que, dans la deuxième configuration fermée, la deuxième poignée bloque la première poignée dans la première configuration fermée.

L'invention s'applique particulièrement aux verrous de capots de nacelles d'aéronefs. Un tel verrou est notamment connu des documents US4538843, US3259411 DE682872, US4531769 et US5984382.

Les verrous sont généralement positionnés sous la nacelle. Une telle position rend difficile l'accès à ces verrous.

La présente invention a pour but de proposer un verrou adapté aux capots de nacelles et présentant un accès facilité et une ergonomie améliorée par rapport aux solutions connues.

A cet effet, l'invention a pour objet un verrou selon la revendication 1.

Suivant d'autres aspects avantageux de l'invention, le verrou comporte l'une ou plusieurs des caractéristiques suivantes, prises isolément ou suivant toutes les combinaisons techniquement possibles :
- les deux poignées forment, dans les première et deuxième configurations fermées, une surface continue ;
- la console forme un logement, le verrou comportant en outre un corps coulissant logé dans le logement, le corps coulissant étant mobile en translation par rapport à la console, entre une première et une deuxième positions axiales, le bras d'accrochage étant articulé à une première extrémité du corps coulissant ;
- le corps coulissant comprend un orifice oblong traversant, s'étendant entre une première extrémité et une deuxième extrémité ; la première poignée est en rotation autour d'une tige de support fixée au premier capot, ladite tige étant disposée dans l'orifice oblong traversant ; dans la première configuration fermée de la première poignée, la première extrémité de l'orifice traversant est proche de la tige de support; et dans la première configuration ouverte de la première poignée, la seconde extrémité de l'orifice traversant est proche de la tige de support ;

- le verrou comporte en outre un mécanisme de bielles comprenant au moins une première et une deuxième bielles, la première bielle étant articulée à la tige de support et à la première poignée, la deuxième bielle étant articulée à la première bielle et à une deuxième extrémité du corps coulissant ;
- la première poignée comprend une première gâchette apte à accrocher un premier barreau relié au premier capot ;
- la deuxième poignée comprend une deuxième gâchette apte à accrocher un deuxième barreau pourvu sur la console.

L'invention se rapporte en outre à un ensemble de verrouillage destiné à assembler un premier et un second capots, ledit ensemble comprenant : un verrou tel que décrit ci-dessus ; une barre d'accrochage apte à être fixée au second capot et à coopérer avec le crochet du bras d'accrochage du verrou ; et une tige de support apte à être fixée au premier capot.

Suivant d'autres aspects avantageux de l'invention, l'ensemble de verrouillage comporte l'une ou plusieurs des caractéristiques suivantes, prises isolément ou suivant toutes les combinaisons techniquement possibles :
- l'ensemble de verrouillage comprend en outre un élément de support, apte à être fixé au premier capot, ledit élément de support comprenant un premier barreau apte à coopérer avec la première gâchette de la première poignée pour maintenir la première poignée dans la première configuration fermée ;
- l'élément de support comprend un palonnier mobile en rotation et un arbre, ledit arbre étant relié d'une part au palonnier, et apte à être relié d'autre part à la deuxième poignée du verrou, de sorte qu'une rotation de la deuxième poignée entraîne une rotation du palonnier.

L'invention se rapporte en outre à une nacelle d'aéronef comprenant un premier et un second capots et un ensemble de verrouillage tel que décrit ci-dessus, dans lequel le verrou et l'élément de support sont fixés à proximité d'un bord inférieur du premier capot ; la nacelle comprenant en outre un dispositif télescopique fixé à proximité de bords supérieurs desdits capots; et un dispositif de liaison reliant l'élément de support au dispositif télescopique, tel qu'une rotation de la deuxième poignée active une configuration verrouillée ou déverrouillée du dispositif télescopique.

L'invention apparaîtra plus clairement à la lecture de la description qui va suivre, donnée uniquement à titre d'exemple non limitatif, et faite en référence aux dessins dans lesquels :
- la figure 1 est une représentation schématique d'une nacelle d'un aéronef, selon un mode particulier de réalisation.
- la figure 2 est une vue de détail, de dessous, de la nacelle de la figure 1, comprenant un verrou selon un mode de réalisation de l'invention dans une première position ;
- la figure 3 est une vue de côté d'un ensemble de verrouillage et du verrou selon un mode de réalisation de l'invention, ledit verrou étant dans la première position ;
- la figure 4 est une vue isométrique de l'ensemble de verrouillage et du verrou de la figure 3, ledit verrou étant dans une deuxième position ;
- la figure 5 est une vue isométrique du verrou renversé de la figure 4 ;
- la figure 6 est une vue isométrique de certains éléments du verrou de la figure 5.

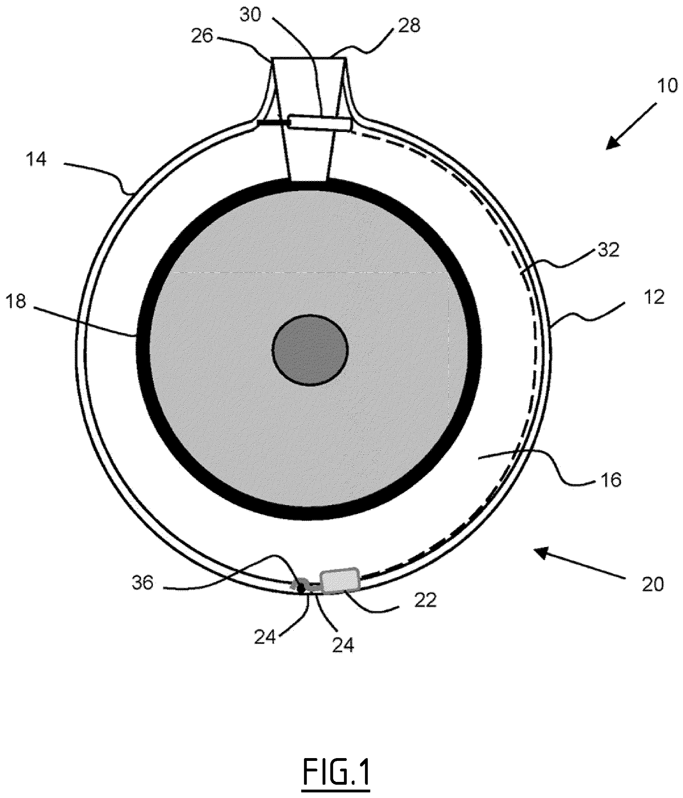

La figure 1 représente une nacelle 10 d'aéronef, comprenant un premier capot 12 et un second capot 14 délimitant un compartiment intérieur 16, renfermant un réacteur 18, et un ensemble de verrouillage 20. Ledit ensemble 20 de verrouillage comporte notamment un verrou 22 selon un mode de réalisation de l'invention. Ces éléments sont représentés de manière schématique sur la figure 1.

Dans la configuration représentée en figure 1, le compartiment 16 est fermé. Les bords inférieurs 24 des capots 12, 14 sont assemblés l'un à l'autre par au moins un ensemble de verrouillage 20.

Les bords supérieurs 26 de chacun des capots sont assemblés à un mât 28 de réacteur et peuvent tourner chacun autour d'un axe de rotation distinct. Les bords supérieurs 26 des capots sont reliés par un dispositif télescopique 30 verrouillable permettant de maintenir les capots en position fermée en vol. Un tel dispositif télescopique est par exemple décrit dans le document EP2914793.

Dans le mode particulier représenté, la nacelle comprend un dispositif de liaison 32, décrit ultérieurement, entre le verrou 22 et le dispositif télescopique 30.

Chaque capot comporte une face externe orientée vers l'extérieur de la nacelle, et une face interne orientée vers le compartiment 16. Dans le mode de réalisation représenté, la face externe de chacun des capots présente un profil lisse et bombé.

Dans la suite de la description, on considère une base orthonormée (X, Y, Z) associée au verrou 22. La direction X correspond à la direction longitudinale, la direction Y correspond à la direction transversale, et la direction Z correspond à la direction normale.

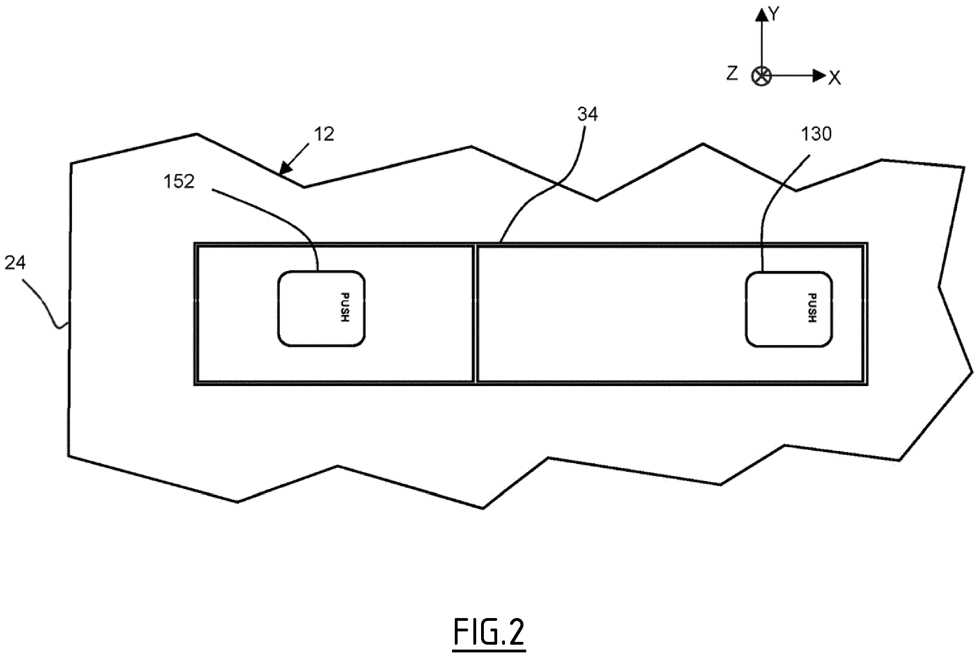

Comme représenté en figure 2, le premier capot 12 comporte une ouverture 34 traversante, de forme allongée. L'ouverture 34 présente un contour fermé et est disposée à proximité d'un bord inférieur 24 du premier capot 12. Le verrou 22 est fixé au premier capot 12 de sorte que ses deux poignées 60 et 64, qui seront décrites ci-après, soient contenues dans l'ouverture 34 et accessibles à un opérateur depuis l'extérieur de la nacelle 10.

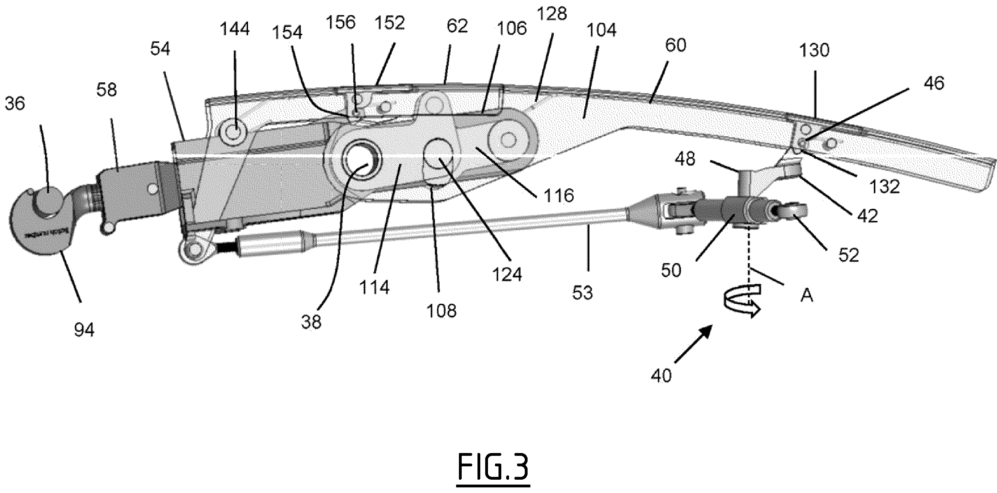

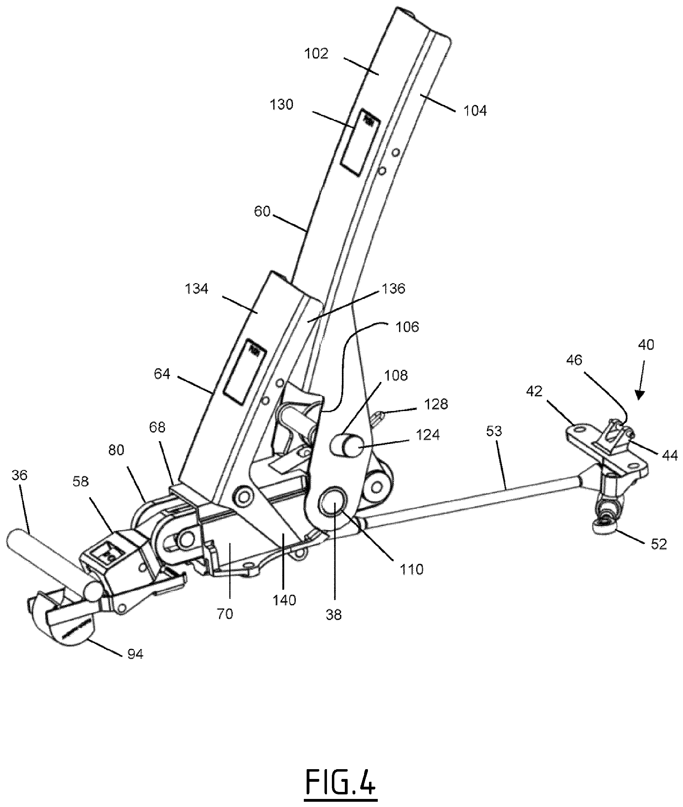

L'ensemble 20 de verrouillage est visible sur les figures 3 et 4. L'ensemble 20 de verrouillage comporte notamment : le verrou 22, décrit en détail ultérieurement ; une barre 36 d'accrochage ; une tige 38 de support et un élément 40 de support.

La barre 36 d'accrochage est fixée à l'intérieur du second capot 14, à proximité de son bord inférieur.

La tige 38 de support est fixée à l'intérieur du premier capot 12, par exemple entre deux éléments de structure (non représentés) disposés sur la face interne du premier capot 12.

L'élément 40 de support est fixé à l'intérieur du premier capot 12, de part et d'autre de l'ouverture traversante 34, au moyen de fixations (non représentées) traversant des orifices ménagés sur une plaque 42 du support. L'élément 40 de support est ainsi disposé dans le compartiment 16. Une première portion 44 s'étendant en saillie depuis une surface de la plaque 42, orientée vers l'ouverture traversante 34, comprend un premier barreau 46. Une deuxième portion 48 s'étendant en saillie depuis une surface opposée de la plaque 42, orientée vers l'intérieur du compartiment 16, comprend un palonnier 50, mobile en rotation autour d'un axe A sensiblement normal à la face interne du premier capot. Le palonnier comprend à chaque extrémité un oeillet 52. L'élément de support 40 comprend également un arbre 53 relié d'une part à l'un des oeillets 52 du palonnier 50, et d'autre part au verrou, comme cela sera décrit ultérieurement.

Le verrou 22, visible sur les figures 3 à 6, et comporte : une console 54 ; un corps coulissant 56 ; un bras d'accrochage 58 ; une première poignée 60 ; un mécanisme 62 de bielles et une deuxième poignée 64.

La console 54 s'étend selon dans une direction longitudinale, parallèle à l'axe X, et comporte : une plaque supérieure 66 et une plaque inférieure 68, s'étendant sensiblement dans des plans (X, Y) ; et deux plaques latérales 70, s'étendant sensiblement dans des plans (X, Z).

La plaque supérieure 66 comporte des moyens 72 d'assemblage au premier capot 12, tels que des orifices de fixation. Les plaques supérieure 66, inférieure 68 et latérales 70 forment un logement 72 de forme sensiblement parallélépipédique, s'étendant dans la direction longitudinale entre deux extrémités ouvertes.

Les plaques latérales 70 forment une saillie axiale 74 par rapport à l'une des extrémités du logement 72. Au niveau de ladite saillie axiale, chaque plaque latérale 70 comporte un trou au contour fermé.

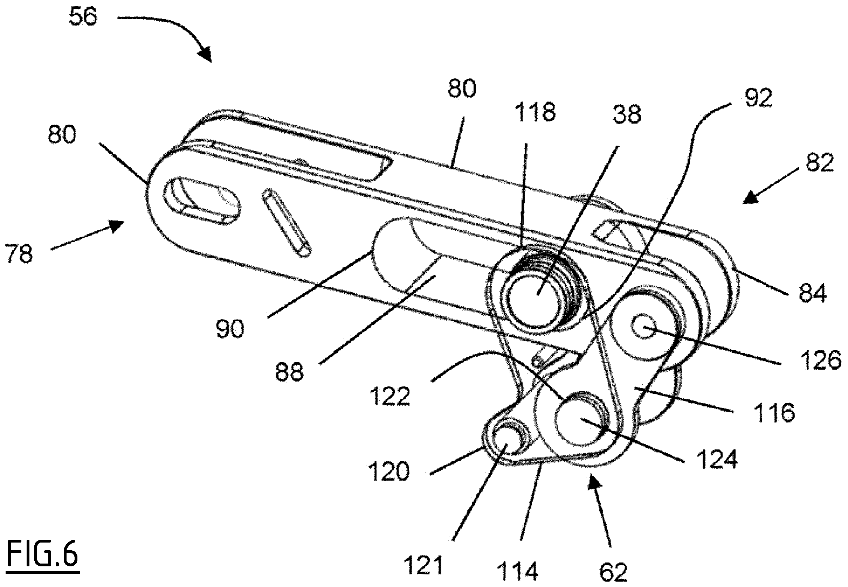

Le corps coulissant 56, visible sur la figure 6, a la forme d'un bloc sensiblement parallélépipédique dont une première extrémité 78 comporte deux premières pattes 80 parallèles. De même, une seconde extrémité 82 comporte deux secondes pattes 84 parallèles.

Chaque première 80 et seconde 84 patte est sensiblement plane et s'étend dans un plan (X, Z). Les premières 80 et secondes pattes 84 sont espacées l'une de l'autre dans la direction transversale, selon l'axe Y.

La portion centrale 86 du corps coulissant s'étend axialement entre les deux extrémités 78, 82 et comprend un orifice oblong traversant 88, s'étendant dans la direction longitudinale. L'orifice 88 présente une première 90 et une seconde 92 extrémités fermées. L'orifice oblong traversant reçoit une portion de la tige 38 de support, s'étendant dans la direction transversale.

Le verrou 22 est ainsi bloqué en rotation autour de l'axe transversal, d'une part par la fixation de la console 54 au premier capot 12, et d'autre part par la tige 38 de support disposée dans l'orifice oblong traversant 88. Le corps coulissant 56 est cependant mobile en translation dans la direction longitudinale dans le logement 72 de la console 54, sur une course définie par la longueur entre les extrémités fermées 90, 92 de l'orifice oblong traversant.

Le bras d'accrochage 58 comprend une première extrémité munie d'un crochet 94. L'extrémité opposée du bras d'accrochage 58 est reliée aux premières pattes 80 du corps coulissant 56 au moyen d'un rivet traversant ladite extrémité et les premières pattes 80. Le bras d'accrochage est mobile en rotation par rapport au corps coulissant 56 autour du rivet, donc autour d'un axe s'étendant dans la direction traversante.

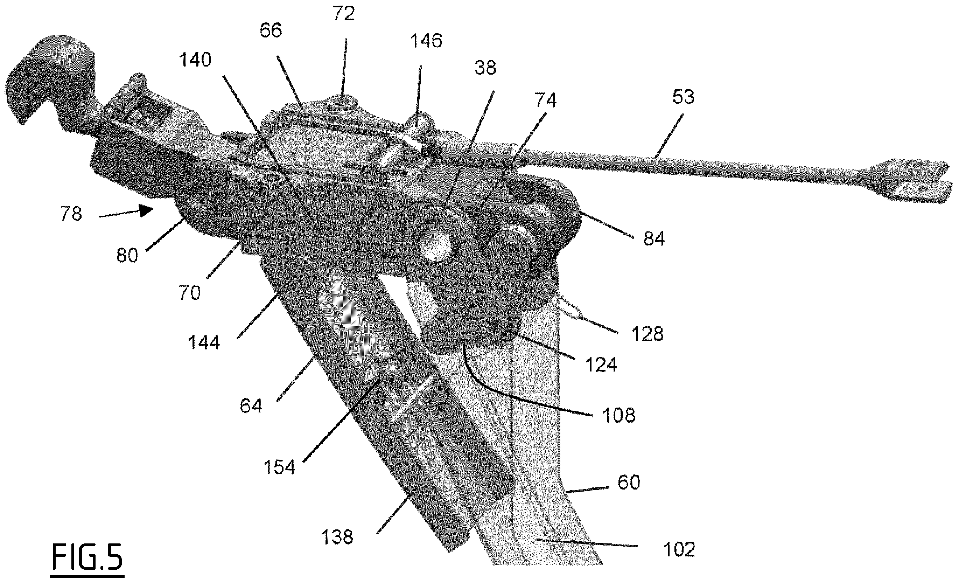

Le crochet 94 est configuré pour coopérer avec la barre 36 d'accrochage afin de maintenir fermé le compartiment 16. Plus précisément, dans la première position du verrou 22 dite fermée, visible sur les figures 2 et 3, le crochet 94 agrippe la barre 36 d'accrochage. Dans la deuxième position du verrou 22 dite ouverte, visible sur les figures 4 et 5, le crochet 94 est à distance de la barre 36 d'accrochage, permettant l'ouverture des capots.

La première poignée 60 est reliée au corps coulissant, et est mobile en rotation par rapport audit corps coulissant 56, autour de la tige 38 de support. La première poignée est représentée en transparence sur la figure 5.

La première poignée 60 présente une section sensiblement en U et comporte : une première âme 102 et deux premiers flancs 104 s'étendant depuis ladite première âme 102. Chaque premier flanc 104 comporte une encoche 106, un perçage oblong 108 et un perçage circulaire 110 pour recevoir la tige 38 de support.

La première poignée 60 est mobile en rotation entre une première configuration fermée, visible en transparence sur les figures 2 et 3, et une première configuration ouverte, visible sur les figures 4 et en transparence sur la figure 5.

La première poignée 60 est par ailleurs liée au mécanisme 62 de bielles, visible sur les figures 3, 5 et 6.

Le mécanisme 62 de bielles comporte deux assemblages identiques, symétriquement disposés de part et d'autre du corps coulissant 56.

Chaque assemblage comporte une première 114 et une deuxième 116 bielles. Chaque première bielle 114, représentée en transparence sur la figure 6, présente une forme en L et comporte une première 118 et une deuxième 120 extrémités, et une articulation centrale 122.

La première extrémité 118 comporte une ouverture circulaire pour recevoir une portion de la tige 38 de support. Ainsi, les premières extrémités 118 des premières bielles 114 sont solidarisées par la tige 38 de support, tout en étant libres de pivoter autour de ladite tige 38 de support. Les deuxièmes extrémités 120 des premières bielles sont reliées entre elles par un axe 121.

Un ergot 124 pourvu sur une première extrémité de la deuxième bielle 116 traverse l'articulation centrale 122 de la première bielle 114 et le perçage oblong 108 de la première poignée. L'ergot 124 relie ainsi la deuxième bielle 118 à la première bielle 114 et à la première poignée 60.

Une goupille 126 s'étend entre les deuxièmes extrémités des deuxièmes bielles 116 et les secondes pattes 84 du corps coulissant, permettant la rotation des deuxièmes bielles 116 autour de la goupille.

Le mécanisme 62 de bielles comporte en outre un ressort 128 de torsion, enroulé autour de la goupille 126.

La tige 38 de support fixée au premier capot 12 traverse donc, dans la direction transversale, les premiers flancs 104 de la première poignée 60, les trous des plaques latérales 70 de la console 54 et les premières bielles 114 du mécanisme 62 de bielle.

Dans la première configuration fermée de la première poignée 36, visible sur la figure 3, le corps coulissant 56 est dans une première position axiale par rapport à la console 54. Plus précisément, dans ladite première position axiale, le corps coulissant est positionné de sorte que la première extrémité 90 de l'orifice 88 traversant contacte la tige 38 de support. Dans cette position, l'ergot 124 de chaque assemblage 112 est à proximité d'une première extrémité du perçage oblong 108 de la première poignée 60, et un bras du ressort de torsion 128 est au contact de l'âme 102 de la première poignée 60. Le ressort 128 exerce sur la première poignée un effort de poussée, tendant à faire passer la première poignée en position ouverte.

Dans la première configuration ouverte de la première poignée 60, visible sur les figures 4 et 5, le corps coulissant 56 est dans une deuxième position axiale par rapport à la console 54. Plus précisément, dans ladite deuxième position axiale, le corps coulissant est positionné de sorte que la deuxième extrémité 92 de l'orifice 88 traversant est à proximité de la tige 38 de support. Dans cette position, l'ergot 124 de chaque assemblage 112 est à proximité d'une deuxième extrémité du perçage oblong 108 de la première poignée 60 et le ressort de torsion 128 ne contacte plus la première poignée 60.

La première poignée 60 comporte par ailleurs une première gâchette 130 munie de premiers crochets 132. La première gâchette 130 est apte à pivoter par rapport à la première poignée. Comme représenté en figure 3, les premiers crochets 132 sont aptes à agripper le premier barreau 46 de l'élément 40 de support pour maintenir la première poignée 60 dans la première configuration fermée.

La deuxième poignée 64 est articulée à la console 54. La deuxième poignée 64 présente une section sensiblement en U et comporte : une deuxième âme 134, de forme sensiblement allongée ; et deux deuxièmes flancs 136 s'étendant depuis la deuxième âme 134.

Chaque deuxième flanc 136 présente une forme sensiblement en L et comporte : une première branche 138, longeant sensiblement la deuxième âme 132 ; et une deuxième branche 140, s'étendant depuis la première branche.

Une deuxième goupille 144, disposée au niveau de l'intersection entre les branches 138 et 140, relie les deuxièmes flancs 136 à la plaque inférieure 68 de la console 54. La deuxième poignée 64 est ainsi mobile en rotation par rapport à la console 54 autour d'un axe transversal parallèle à l'axe Y matérialisé par la deuxième goupille 144.

Une tige de liaison 146 relie les extrémités des deuxièmes branches 140 de la deuxième poignée. L'arbre 53 de l'élément de support 40 est relié à la tige de liaison 146.

Le dispositif de liaison 32 décrit précédemment relie l'élément de support 40 au dispositif télescopique 30 mentionné précédemment. Le dispositif de liaison 32 comprend par exemple un câble attaché à l'autre des deux oeillets 52 du palonnier et au dispositif télescopique 30. Le dispositif de liaison 32 est apte à faire basculer le dispositif télescopique 30 entre une configuration de verrouillage activé et une configuration de verrouillage désactivé.

La deuxième poignée 64 est mobile en rotation entre une deuxième configuration fermée, visible sur les figures 1, 2 et 3, et une deuxième configuration ouverte, visible sur les figures 4 et 5.

Selon l'invention et comme visible sur la figure 3, dans la deuxième configuration fermée de la deuxième poignée 64, la première branche 138 de chaque deuxième flanc 136 est emboîtée dans l'encoche 106 de l'un des premiers flancs 104 de la première poignée 60. Ainsi, par un système de forme et de contreforme sur les deux poignées, la première poignée 60 est bloquée dans la première configuration fermée lorsque la deuxième poignée 64 est dans la deuxième configuration fermée. D'autres configurations de formes et contreformes peuvent être prévues sur les deux poignées que celles représentées, seulement la configuration précédente étant conforme à l'invention.

Par ailleurs, dans la deuxième configuration fermée de la deuxième poignée 64, les faces externes des deux poignées 60, 64 forment une surface continue lisse, s'insérant dans le contour fermé de l'ouverture 34 traversante du premier capot 12. Ainsi, dans la position fermée du verrou 22, visible sur les figures 1 à 3, le premier capot 12 présente une surface externe sensiblement continue et lisse.

Par ailleurs, dans la deuxième configuration fermée de la deuxième poignée 64, les extrémités libres des deuxièmes branches 140 sont dans une première position axiale tendant à tirer l'arbre 53 vers le crochet 94, et donc amener le dispositif télescopique 30 dans une configuration de verrouillage activé.

Dans la deuxième configuration ouverte de la deuxième poignée 64, visible sur la figure 4, les deuxièmes flancs 136 sont à l'écart des premiers flancs 104 de la première poignée 60. La deuxième configuration ouverte de la deuxième poignée 64 permet ainsi la rotation de la première poignée 60 par rapport à la console 54.

Par ailleurs, dans la deuxième configuration ouverte de la deuxième poignée 64, par l'effet de rotation de la poignée 64 autour de la console 54, les extrémités libres des deuxièmes branches 140 sont dans une deuxième position axiale tendant à pousser l'arbre 53 à l'opposé du crochet 94, et donc amener le dispositif télescopique 30 dans une configuration de verrouillage désactivé.

La deuxième poignée 64 comporte par ailleurs une deuxième gâchette 152 comprenant des deuxièmes crochet 154, apte à agripper un deuxième barreau 156, solidaire de la plaque inférieure 68 de la console, afin de maintenir ladite deuxième poignée dans ladite deuxième configuration fermée.

Un procédé de fonctionnement de l'ensemble de verrouillage 20 va maintenant être décrit.

On considère que, dans un état initial, le compartiment 16 est fermé et que les capots 12, 14 et le verrou 22 sont dans la position visible sur les figures 1-3.

Tout d'abord, un opérateur appuie sur la deuxième gâchette 152 pour ouvrir la deuxième poignée 64 qui tourne autour de la deuxième goupille 144. Les extrémités libres de la deuxième poignée tournent dans le sens horaire et passent ainsi de la première à la deuxième position axiale. Par l'intermédiaire de la tige de liaison 146 poussant l'arbre 53 et activant la rotation du palonnier 50 autour de l'axe A, le dispositif télescopique 30 est déverrouillé.

L'opérateur appuie ensuite sur la première gâchette 130 pour ouvrir la première poignée 60 qui pivote alors autour de la tige 38 de support. Le corps coulissant 56 se déplace ensuite longitudinalement par rapport à la console 54, conduisant le bras d'accrochage 58 à pivoter par rapport à la console. Le crochet 94 s'écarte ainsi de la barre d'accrochage 36.

Le verrou 22 est alors dans la deuxième position des figure 4 et 5. Le crochet 94 n'étant plus retenu par la barre 36 d'accrochage, les bords supérieur 26 des capots 12, 14 peuvent s'écarter sous l'action d'un mécanisme non représenté, tel qu'un vérin hydraulique, activé par l'opérateur. Le compartiment 16 est ainsi ouvert, permettant une intervention sur le réacteur 18.

A la fin de ladite intervention, les capots 12, 14 sont rabattus par l'opérateur au moyen dudit mécanisme. Le dispositif télescopique 30 est replié. La première poignée 60 est alors fermée par l'opérateur. Selon un procédé inverse de celui décrit précédemment, le bras d'accrochage 94 pivote en direction du second capot 14 et le corps coulissant 56 se déplace longitudinalement, de sorte à permettre au crochet 94 d'agripper la barre d'accrochage 36 pour rapprocher les bords inférieurs des capots 12, 14.

Arrivant au contact du premier barreau 46 de l'élément de support, les premiers crochet 132 de la première gâchette 128 agrippent ledit barreau, maintenant la première poignée 60 dans la première position fermée. Le verrou 22 est ainsi verrouillé.

L'opérateur ferme ensuit la deuxième poignée 64, qui s'emboite dans la première poignée 60. Le dispositif de liaison 32 est ainsi actionné, verrouillant le dispositif télescopique 30 en position fermée.

Arrivant au contact du deuxième barreau 156, les deuxièmes crochets 154 agrippent ledit barreau, maintenant la deuxième poignée fermée. Le dispositif télescopique 30 est ainsi verrouillé.

Le verrou 22 décrit ci-dessus est facile d'utilisation et ergonomique pour un opérateur. Le verrou 22 permet en effet d'activer le dispositif télescopique 30 au moyen d'un seul verrou, réduisant ainsi le poids et la complexité du mécanisme. La traînée aéraulique associée à la présence de tels verrous est également diminuée.

Par ailleurs, le système de double poignée décrit ci-dessus permet de sécuriser l'ordre d'actionnement du verrou 22 et du dispositif télescopique 30, et notamment s'assurer que le verrou 22 est verrouillé, et que les capots sont effectivement fermés, avant de verrouiller le dispositif télescopique 30.

En effet, toute tentative de verrouillage du dispositif télescopique 30 avant le verrouillage du verrou 22 peut mener à la casse dudit dispositif télescopique lors du rapprochement des capots, et/ou mener à un possible non-verrouillage dudit dispositif télescopique, impliquant dans les deux cas un risque d'ouverture des capots en partie haute en vol sous fortes contraintes.

Enfin, l'opérateur doit ouvrir la deuxième poignée 64, donc actionner le déverrouillage du dispositif télescopique 30, pour pouvoir ouvrir la première poignée 60, c'est-à-dire pour pouvoir ouvrir le verrou 22. La première poignée 60 ne peut en effet pas s'ouvrir avant la deuxième poignée 64, même si l'opérateur appuie sur la première gâchette 130, car l'emboitement de la deuxième poignée dans l'encoche 106 de la première poignée bloque la rotation de la première poignée 60.

L'invention n'est cependant pas limitée au mode de réalisation décrit ci-dessus. Ainsi, l'ouverture 34 peut être fermée par une trappe, et le verrou peut être disposé en retrait de la trappe dans la direction normale à la trappe, de sorte que les poignées ne soient accessibles qu'une fois la trappe ouverte.

## Revendications

1. Verrou (22) destiné à assembler un premier (12) et un second (14) capots de nacelle, ledit verrou comprenant :
- une console (54) apte à être fixée au premier capot (12) ;
- un bras d'accrochage (58) comprenant un crochet (94) apte à coopérer avec une barre d'accrochage (36) fixée au second capot (14) ;
- une première poignée (60) mobile en rotation par rapport à la console, entre une première configuration ouverte et une première configuration fermée ;
- une deuxième poignée (64) mobile en rotation par rapport à la console, entre une deuxième configuration ouverte et une deuxième configuration fermée,
les première (60) et deuxième (64) poignées étant configurées de sorte que, dans la deuxième configuration fermée, la deuxième poignée (64) bloque la première poignée (60) dans la première configuration fermée, où
- la première poignée (60) présente une section sensiblement en U et comporte une première âme (102) et deux premiers flancs (104) s'étendant depuis ladite première âme
- la deuxième poignée (64) comporte une deuxième âme (134);
le verrou étant **caractérisé en ce que**:
- chaque premier flanc (104) comporte une encoche (106);
- la deuxième poignée (64) présente une section sensiblement en U et deux deuxièmes flancs (136) s'étendant depuis ladite deuxième âme ; et **en ce que**
dans la deuxième configuration fermée de la deuxième poignée (64), une forme (138) de chacun des deuxièmes flancs (136) de la deuxième poignée est emboîtée dans une contreforme formée par l'encoche (106) de l'un des premiers flancs (104) de la première poignée (60) de sorte à bloquer la première poignée (60) dans la première configuration fermée.

2. Verrou selon la revendication 1, dans lequel les deux poignées (60, 64) forment, dans les première et deuxième configurations fermées, une surface continue.

3. Verrou selon la revendication 1 ou 2, dans lequel la console forme un logement (72), le verrou comportant en outre un corps coulissant (56) logé dans le logement (72), le corps coulissant étant mobile en translation par rapport à la console, entre une première et une deuxième positions axiales, le bras d'accrochage (58) étant articulé à une première extrémité (78) du corps coulissant.

4. Verrou selon la revendication 3, dans lequel le corps coulissant (56) comprend un orifice oblong traversant (88) s'étendant entre une première extrémité (90) et une deuxième extrémité (92); et dans lequel :
- la première poignée (60) est en rotation autour d'une tige de support (38) fixée au premier capot (12), ladite tige étant disposée dans l'orifice oblong traversant (88) ;
- dans la première configuration fermée de la première poignée, la première extrémité (90) de l'orifice traversant est proche de la tige de support (38) ; et dans la première configuration ouverte de la première poignée, la seconde extrémité (92) de l'orifice traversant est proche de la tige de support (38).

5. Verrou selon la revendication 4, comportant en outre un mécanisme de bielles (62) comprenant au moins une première (114) et une deuxième (116) bielles, la première bielle étant articulée à la tige de support (38) et à la première poignée (60), la deuxième bielle (116) étant articulée à la première bielle (114) et à une deuxième extrémité (82) du corps coulissant (56).

6. Verrou selon l'une des revendications précédentes, dans lequel la première poignée (60) comprend une première gâchette (130) apte à accrocher un premier barreau (156) relié au premier capot (12).

7. Verrou selon l'une des revendications précédentes, dans lequel la deuxième poignée (64) comprend une deuxième gâchette (152) apte à accrocher un deuxième barreau (156) pourvu sur la console (54).

8. Ensemble (11) de verrouillage destiné à assembler un premier (12) et un second (14) capots, ledit ensemble comprenant : un verrou (12) selon l'une des revendications précédentes ; une barre d'accrochage (36) apte à être fixée au second capot (14) et à coopérer avec le crochet (94) du bras d'accrochage du verrou ; et une tige de support (38) apte à être fixée au premier capot (12).

9. Ensemble de verrouillage selon la revendication 8, ledit ensemble comprenant un verrou selon la revendication 6, comprenant en outre un élément de support (40), apte à être fixé au premier capot (12), ledit élément de support (40) comprenant un premier barreau (46) apte à coopérer avec la première gâchette (130) de la première poignée (60) pour maintenir la première poignée dans la première configuration fermée.

10. Ensemble de verrouillage selon la revendication 9, dans lequel l'élément de support (40) comprend un palonnier (50) mobile en rotation et un arbre (53), ledit arbre étant relié d'une part au palonnier, et apte à être relié d'autre part à la deuxième poignée (64) du verrou (22), de sorte qu'une rotation de la deuxième poignée entraîne une rotation du palonnier (50).

11. Nacelle (10) comprenant un premier (12) et un second (14) capots et un ensemble (20) de verrouillage selon l'une des revendications 8 à 10, dans lequel le verrou (22) et l'élément de support (40) sont fixés à proximité d'un bord inférieur (24) du premier capot (12) ; la nacelle comprenant en outre un dispositif télescopique (30) verrouillable permettant de maintenir les capots en position fermée en vol, ledit dispositif étant fixé à proximité de bords supérieurs (26) desdits capots; et un dispositif de liaison (32) reliant l'élément de support (40) au dispositif télescopique (30), tel qu'une rotation de la deuxième poignée (64) active une configuration verrouillée ou déverrouillée du dispositif télescopique (30).

## Patentansprüche

1. Verriegelung (22), die dazu bestimmt ist, eine erste (12) und eine zweite (14) Gondelhaube zusammenzubauen, die Verriegelung umfassend:
- eine Konsole (54), die geeignet ist, um an der ersten Haube (12) befestigt zu werden;
- einen Einhängearm (58), umfassend einen Haken (94), der geeignet ist, um mit einer Einhängestange (36) zusammenzuwirken, die an der zweiten Haube (14) befestigt ist;
- einen ersten Griff (60), der in Bezug auf die Konsole zwischen einer ersten offenen Konfiguration und einer ersten geschlossenen Konfiguration drehbar ist;
- einen zweiten Griff (64), der in Bezug auf die Konsole zwischen einer zweiten, offenen Konfiguration und einer zweiten, geschlossenen Konfiguration drehbar ist,
wobei der erste (60) und der zweite (64) Griff konfiguriert sind, sodass der zweite Griff (64) in der zweiten geschlossenen Konfiguration den ersten Griff (60) in der ersten geschlossenen Konfiguration blockiert,
wobei
- der erste Griff (60) einen im Wesentlichen U-förmigen Querschnitt aufweist und einen ersten Steg (102) und zwei erste Flanken (104) aufweist, die sich von dem ersten Steg erstrecken
- der zweite Griff (64) einen zweiten Steg (134) aufweist;
wobei die Verriegelung **dadurch gekennzeichnet ist, dass**:
- jede erste Flanke (104) eine Kerbe (106) aufweist;
- der zweite Griff (64) einen im Wesentlichen U-förmigen Querschnitt und zwei zweite Flanken (136) aufweist, die sich von dem zweiten Steg erstrecken; und dass
in der zweiten geschlossenen Konfiguration des zweiten Griffs (64) eine Form (138) von jeder der zweiten Flanken (136) des zweiten Griffs in eine durch die Kerbe (106) einer der ersten Flanken (104) des ersten Griffs (60) gebildete Gegenform eingepasst ist, um den ersten Griff (60) in der ersten geschlossenen Konfiguration zu verriegeln.

2. Verriegelung nach Anspruch 1, wobei die zwei Griffe (60, 64) in der ersten und der zweiten geschlossenen Konfiguration eine durchgehende Fläche bilden.

3. Verriegelung nach Anspruch 1 oder 2, wobei die Konsole eine Aufnahme (72) bildet, die Verriegelung ferner einen Gleitkörper (56) aufweist, der in der Aufnahme (72) untergebracht ist, wobei der Gleitkörper in Bezug auf die Konsole zwischen einer ersten und einer zweiten axialen Position translatorisch bewegbar ist, wobei der Einhängearm (58) an einem ersten Ende (78) des Gleitkörpers angelenkt ist.

4. Verriegelung nach Anspruch 3, wobei der Gleitkörper (56) ein längliches Durchgangsloch (88) umfasst, das sich zwischen einem ersten Ende (90) und einem zweiten Ende (92) erstreckt; und wobei:
- der erste Griff (60) um eine an der ersten Haube (12) befestigte Stützstange (38) drehbar ist, wobei die Stange in dem länglichen Durchgangsloch (88) angeordnet ist;
- das erste Ende (90) der Durchgangsöffnung in der ersten geschlossenen Konfiguration des ersten Griffs nahe an der Stützstange (38) ist; und das zweite Ende (92) der Durchgangsöffnung in der ersten offenen Konfiguration des ersten Griffs nahe an der Stützstange (38) ist.

5. Verriegelung nach Anspruch 4, das ferner einen Stangenmechanismus (62), umfassend mindestens eine erste (114) und eine zweite (116) Stange, aufweist, wobei die erste Stange gelenkig mit der Stützstange (38) und dem ersten Griff (60) verbunden ist und die zweite Stange (116) gelenkig mit der ersten Verbindung (114) und einem zweiten Ende (82) des Gleitkörpers (56) verbunden ist.

6. Verriegelung nach einem der vorherigen Ansprüche, wobei der erste Griff (60) einen ersten Drücker (130) umfasst, der geeignet ist, um eine erste Stange (156), die mit der ersten Haube (12) verbunden ist, einzuhaken.

7. Verriegelung nach einem der vorherigen Ansprüche, wobei der zweite Griff (64) einen zweiten Drücker (152) umfasst, der geeignet ist, um eine zweite Stange (156), die an der Konsole (54) bereitgestellt ist, einzuhaken.

8. Verriegelungsanordnung (11), die dazu bestimmt ist, eine erste (12) und eine zweite (14) Haube zusammenzubauen, die Anordnung umfassend: eine Verriegelung (12) nach einem der vorherigen Ansprüche; eine Hakenstange (36), die geeignet ist, um an der zweiten Haube (14) befestigt zu werden und mit dem Haken (94) des Einhängearms der Verriegelung zusammenzuwirken; und eine Stützstange (38), die geeignet ist, um an der ersten Haube (12) befestigt zu werden.

9. Verriegelungsanordnung nach Anspruch 8, die Anordnung umfassend eine Verriegelung nach Anspruch 6, ferner umfassend ein Trägerelement (40), das geeignet ist, um an der ersten Haube (12) befestigt zu werden kann, das Trägerelement (40) umfassend eine erste Stange (46), die geeignet ist, um mit dem ersten Drücker (130) des ersten Griffs (60) zusammenzuwirken, um den ersten Griff in der ersten geschlossenen Konfiguration zu halten.

10. Verriegelungsanordnung nach Anspruch 9, wobei das Trägerelement (40) eine drehbare Traverse (50) und eine Welle (53) umfasst, wobei die Welle einerseits mit der Traverse verbunden ist und andererseits geeignet ist, um mit dem zweiten Griff (64) der Verriegelung (22) verbunden zu werden, sodass eine Drehung des zweiten Griffs eine Drehung der Traverse (50) bewirkt.

11. Gondel (10), umfassend eine erste (12) und eine zweite (14) Haube und eine Verriegelungsanordnung (20) nach einem der Ansprüche 8 bis 10, wobei die Verriegelung (22) und das Trägerelement (40) in der Nähe einer Unterkante (24) der ersten Haube (12) befestigt sind; die Gondel ferner umfassend eine verriegelbare teleskopische Vorrichtung (30), die es ermöglicht, die Hauben während des Flugs in einer geschlossenen Position zu halten, wobei die Vorrichtung in der Nähe der oberen Kanten (26) der Hauben befestigt ist; und eine Verbindungsvorrichtung (32), die das Trägerelement (40) mit der teleskopischen Vorrichtung (30) verbindet, sodass eine Drehung des zweiten Griffs (64) eine verriegelte oder entriegelte Konfiguration der teleskopischen Vorrichtung (30) aktiviert.

## Claims

1. A lock (22) for connecting a first (12) and a second (14) nacelle cowls, said lock comprising:
- a bracket (54) capable of being attached to the first cowl (12);
- a hooking arm (58) comprising a hook (94) able to cooperate with a hooking bar (36) attached to the second cowl (14);
- a first handle (60) that can rotate relative to the bracket between a first open configuration and a first closed configuration;
- a second handle (64) that can be rotated relative to the bracket between a second open configuration and a second closed configuration,
the first (60) and second (64) handles being configured so that, in the second closed configuration, the second handle (64) locks the first handle (60) in the first closed configuration,
wherein
- the first handle (60) has a substantially U-shaped cross-section and comprises a first core (102) and two first flanks (104) extending from said first core
- the second handle (64) comprises a second core (134); the lock being **characterised in that**:
- each first flank (104) has a notch (106);
- the second handle (64) has a substantially U-shaped cross-section
and two second flanks (136) extending from said second core; and **in that**,
in the second closed configuration of the second handle (64), a shape (138) of each of the second flanks (136) of the second handle is fitted into a counter-shape formed by the notch (106) of one of the first flanks (104) of the first handle (60) so as to immobilize the first handle (60) in the first closed configuration.

2. The lock according to claim 1, wherein the two handles (60, 64) form a continuous surface in the first and second closed configurations.

3. The lock according to claim 1 or 2, wherein the bracket forms a housing (72), the lock further comprising a sliding body (56) housed in the housing (72), the sliding body being movable in translation relative to the bracket between first and second axial positions, the hooking arm (58) being hinged to a first end (78) of the sliding body.

4. The lock according to claim 3, wherein the sliding body (56) comprises an elongate through-hole (88) extending between a first end (90) and a second end (92); and wherein:
- the first handle (60) rotates about a support rod (38) attached to the first cowl (12), said rod being arranged in the elongate through-hole (88);
- in the first closed configuration of the first handle, the first end (90) of the through-hole is close to the support rod (38); and in the first open configuration of the first handle, the second end (92) of the through hole is close to the support rod (38).

5. The lock according to claim 4, further comprising a link mechanism (62) comprising at least a first (114) and a second (116) link, the first link being articulated to the support rod (38) and to the first handle (60), the second link (116) being articulated to the first link (114) and to a second end (82) of the sliding body (56).

6. The lock according to one of the preceding claims, wherein the first handle (60) comprises a first trigger (130) suitable for hooking a first bar (156) connected to the first cowl (12).

7. The lock according to one of the preceding claims, wherein the second handle (64) comprises a second trigger (152) suitable for hooking a second bar (156) provided on the bracket (54).

8. A locking assembly (11) intended to assemble a first (12) and a second (14) cowl, said assembly comprising: a lock (12) according to one of the preceding claims; a hooking bar (36) able to be attached to the second cowl (14) and to cooperate with the hook (94) of the hooking arm of the lock; and a support rod (38) able to be attached to the first cowl (12).

9. The locking assembly according to claim 8, said assembly comprising a lock according to claim 6, further comprising a support element (40), adapted to be attached to the first cowl (12), said support element (40) comprising a first bar (46) adapted to cooperate with the first trigger (130) of the first handle (60) to maintain the first handle in the first closed configuration.

10. The locking assembly according to claim 9, in which the support element (40) comprises a spreader bar (50) which is movable in rotation and a shaft (53), said shaft being connected on the one hand to the spreader bar and capable of being connected on the other hand to the second handle (64) of the lock (22), so that rotation of the second handle causes rotation of the spreader bar (50).

11. A nacelle (10) comprising a first (12) and a second (14) cowl and a locking assembly (20) according to one of claims 8 to 10, wherein the lock (22) and the support element (40) are attached in proximity to a lower edge (24) of the first cowl (12); the nacelle further comprising a lockable telescopic device (30) for maintaining the cowls in a closed position in flight, said device being attached in proximity to upper edges (26) of said cowls; and a linkage device (32) connecting the support member (40) to the telescopic device (30), such that rotation of the second handle (64) activates a locked or unlocked configuration of the telescopic device (30).
